Europäisches Patentamt

European Patent Office

Office européen des brevets

(19)

(11) Veröffentlichungsnummer: **0 356 911 B1**

(12) # EUROPÄISCHE PATENTSCHRIFT

(45) Veröffentlichungstag der Patentschrift: **16.12.92**

(51) Int. Cl.⁵: **F16L 11/112**, F16L 55/165

(21) Anmeldenummer: **89115609.3**

(22) Anmeldetag: **24.08.89**

(54) **Schlauch zur Sanierung von Rohrleitungen, insbesondere von Abwasserkanälen.**

(30) Priorität: **26.08.88 DE 3828972**
 **07.12.88 DE 3841204**
 **15.04.89 DE 3912467**
 **18.07.89 DE 3923697**

(43) Veröffentlichungstag der Anmeldung:
 **07.03.90 Patentblatt 90/10**

(45) Bekanntmachung des Hinweises auf die
 Patenterteilung:
 **16.12.92 Patentblatt 92/51**

(84) Benannte Vertragsstaaten:
 **AT BE CH DE ES FR GB GR IT LI NL SE**

(56) Entgegenhaltungen:
 **EP-A- 0 213 674       WO-A-87/05376**
 **DE-A- 2 263 368       DE-A- 3 129 870**
 **FR-A- 1 580 939       GB-A- 2 041 147**
 **US-A- 3 047 026**

(73) Patentinhaber: **BAYER AG**

 **W-5090 Leverkusen 1 Bayerwerk(DE)**

 Patentinhaber: **PHOENIX AKTIENGESELL-
 SCHAFT**
 **Hannoversche Strasse 88**
 **W-2100 Hamburg 90(DE)**

(72) Erfinder: **Bilstein, Eberhard, Dipl.-Ing.**
 **Herstattallee 2**
 **W-5000 Köln 71(DE)**
 Erfinder: **Hasky, Hans-Theo, Dipl.-Ing.**
 **von Diergardt-Strasse 62e**
 **W-5090 Leverkusen 1(DE)**
 Erfinder: **Müller, Georg, Dipl.-Ing.**
 **Wupperstrasse 17**
 **W-4018 Langenfeld(DE)**
 Erfinder: **Vogel, Wolfgang, Dipl.-Ing.**
 **Gartenstrasse 68**
 **W-5200 Siegburg(DE)**
 Erfinder: **Friederich, Hans-Werner, Dipl.-Ing.**
 **Flachsweg 5**
 **W-2090 Winsen Luhe(DE)**
 Erfinder: **Wessel, Klemens**
 **Lauensteinstrasse 15**
 **W-2000 Hamburg 60(DE)**
 Erfinder: **Zerfowski, Peter, Dipl.-Ing.**
 **Hausbrucher Strasse 114**
 **W-2104 Hamburg 92(DE)**

**Beschreibung**

Die Erfindung betrifft einen Schlauch zur Sanierung von Rohrleitungen, insbesondere von Abwasserkanälen, gemäß Oberbegriff des Anspruchs 1 (vgl. US-A-3 047 026).

Die Sanierung alter Rohre mit nicht begehbarem Querschnitt wird für die Betreiber von Abwasserrohrnetzen die große Aufgabe der nächsten Jahre sein. Die erheblichen Strecken alter Entwässerungsleitungen mit bereits bestehenden oder in Kürze zu erwartenden Schäden sind sowohl in abwassertechnischer Hinsicht (Verstopfungen, Straßeneinbrüche usw.) als auch in umwelttechnischer Hinsicht problematisch, da die austretenden Abwässer das Grundwasser verunreinigen und somit die Trinkwasserreserven gefährden.

Aufgrund beengter Trassenverhältnisse und hoher Verkehrsdichte kommt für die Erneuerung der vorhandenen Leitungen oft nur eine unterirdische Bauweise in Frage, wobei folgende Anforderungen zu erfüllen sind:
- keine bzw. nur geringe Erdarbeiten;
- kurze Bauzeit;
- Erhalt bzw. Verbesserung der vorhandenen hydraulischen Verhältnisse;
- Kosten geringer als Neubaukosten in offener Bauweise.

Es gibt verschiedene Sanierungsverfahren, wobei das Rohr-in-Rohr-Sanierungsverfahren, im folgenden kurz Relining-Verfahren genannt, bisher die größte Bedeutung erlangt hat. Der diesbezügliche Stand der Technik wird nun näher erläutert.

1) Kurzrohrrelining

Beim Kurzrohrrelining können Kurzrohre in den Revisionsschächten zusammengeschoben und untereinander mit Dichtringen aus Perbunan oder EPDM abgedichtet werden. Nach Anschluß eines neuen Kurzrohres erfolgt das Einschieben oder Einziehen in den defekten Kanal. Schwachpunkte sind die Vielzahl von Rohrverbindungen, von denen jede durch Form- oder Ausführungsfehler undicht sein kann. Außerdem ist kein Richtungswechsel im Rohr möglich.

2) Relining mit HDPE-Rohren über Baugruben

Zum Relining von Rohren aus HDPE (Polyethylen hoher Dichte) werden im Regelfall Kanalbaugruben (Erdarbeiten) erforderlich. Über diese Baugruben werden die HDPE-Rohre in den defekten Kanal eingezogen. Der Verfahrensnachteil besteht in den häufig störenden und kostenintensiven Erdbaugruben. Zudem ist kein Richtungswechsel im Rohr möglich.

3) RIB-Loc-Relining mit im Revisionsschacht hergestellten PVC-Wickelrohren

Beim RIB-Loc-Relining werden im Revisionsschacht aus einem PVC-Extruder-Profil Endlos-Rohre gewickelt und in die defekten Rohre eingebaut. Verfahrensnachteil ist der Werkstoff PVC, der weniger chemiekalien- und nagetierbeständig ist. Außerdem ist der Richtungswechsel im Rohr nur eingeschränkt möglich.

4) Insituformverfahren

Beim Insituformverfahren wird ein vorgefertigter und mit härtbaren Massen (Harz) getränkter Faserfilzschlauch in die defekte Rohrleitung eingebracht und, je nach aushärtender Masse verschieden, erhärtet. Der eingebrachte Faserfilzschlauch wird über einen Kalibrierschlauch mit Wasserdruck an die Innenwandung der zu sanierenden Rohrleitung gepreßt. Durch Aushärtung des Harzes wird der Schlauch zum Rohr. Verfahrensnachteil ist die durch Unebenheit des defekten Rohres bedingte längskraftschlüssige Verbindung der beiden Innenrohre. Im Fall einer eventuell später erforderlichen weiteren Instandhaltungsmaßnahme kann das Innenrohr nicht oder nur aufwendig entfernt werden. Auch ist die homogene Qualität des Innenrohres schwer prüfbar.

5) Auskleidungsverfahren unter Einsatz eines Bindemittels

Nach diesem Verfahren wird das schlauchförmige Auskleidungsmaterial aus textilem Werkstoff mit Hilfe eines Bindemittels (Klebers) auf die Innenfläche der Rohrleitung aufgebracht (DE-A-34 14 531 und 35 05 107; GB-B-10 02 131, 10 25 011 und 10 69 623; US-A-27 94 785, 31 32 062, 32 30 129 und 34 94 813). Ein besonderer Nachteil ist hier, daß die Menge und die Verteilung des Bindemittels nicht kontrolliert werden kann, so daß diese gegebenenfalls ungleichförmig aufgebracht wird. Die Vielzahl der Publikationen verdeutlichen die Problematik bei diesem Auskleidungsverfahren.

6) Sonstiges Auskleidungsverfahren

Aus der DE-A-26 29 214 ist ein Verfahren zum Auskleiden von Rohrleitungen bekannt, bei dem ein Gummischlauch mit eingebetteten Verstärkungselementen unter Querschnittsverkleinerung verformt in Längsrichtung in die Rohrleitung eingezogen und nach dem Einziehen unter Querschnittsvergrößerung rückgeformt wird, wobei er sich gegen die Innenwand der Rohrleitung preßt. Mit diesem Auskleidungsverfahren sind jedoch eine Reihe von Nachteilen verbunden. Diese sind:

- Eine Querschnittsverkleinerung ist nur bei bestimmten Schlauchtypen möglich. Eine derartige Maßnahme hängt sehr stark von der Wandstärke, vom Werkstoff und dem Festigkeitsträgeraufbau des Schlauches ab.
- Zur Unterstützung der querschnittsvermindernden Verformung wird häufig der Schlauch im Innern mit einem Vakuum beaufschlagt und danach mit äußeren Verriegelungsbändern, Schnüren oder dergleichen umwickelt. Eine derartige zusätzliche Verfahrensmaßnahme ist aufwendig und kostenintensiv.
- Nach der Rückverformung sitzt der Schlauch fest an der Schlauchinnenwand. Der spätere Austausch eines defekten Schlauches ist ohne aufwendige Maßnahmen nicht möglich.
- Bei Rohrleitungssystemen mit Richtungswechsel ist ein derartiges Sanierungsverfahren nur im begrenzten Maße möglich, da eine vollständige Rückverformung im Bogenbereich schwer zu realisieren ist.

Ein gemeinsamer Nachteil der hier vorgestellten Sanierungsverfahren ist der, daß eine längere Betriebsunterbrechung unumgänglich ist. Dies gilt insbesondere für die Verfahrensvarianten 4 und 5, bei denen der Einsatz von Harz bzw. Bindemitteln ein völliges Trocknen der zu sanierenden Abwasserrohre erforderlich macht. Da im industriellen Bereich die Betriebe ständig Abwässer abgeben möchten, spielt der Zeitfaktor für eine Unterbrechung eine entscheidende Rolle.

7) Spiralschläuche

Es sind Schläuche aus Gummi oder gummiähnlichem Werkstoff bekannt (FR-A-1 580 939, US-A-3 047 026), die folgenden Aufbau aufweisen:
- zwischen der Schlauchseele und der Schlauchdecke befinden sich zwei Verstärkungssysteme, wobei das innere Verstärkungssystem ein Spiraldraht und das äußere Verstärkungssystem ein wellenförmiger Druckträger ist;
- zwischen der Schlauchseele und dem Druckträger befindet sich eine Polsterung, in der der Spiraldraht eingebettet ist;
- die Schlauchdecke ist als Rippen-Rillen-System ausgebildet, wobei jeweils die Rippen im Bereich der Druckträgererhebungen und die Rillen im Bereich der Druckträgervertiefungen angeordnet sind.

Derartige Spiralschläuche sind wegen ihres speziellen Festigkeitsträgeraufbaus als Saugschläuche (Unterdruck bis 0,9 bar) und als Druckschläuche (Betriebsdruck 5 bar) geeignet.

Die bisher bekannten Spiralschläuche größeren Durchmessers knicken jedoch im drucklosen Zustand bei einem Biegeradius $R \leq 5d$ ($d$ = Schlauchdurchmesser) ab. Deren Einsatzbereich findet also überall dort Grenzen, wo größere Richtungswechsel vorgenommen werden müssen. Da im Rohrleitungsnetz Richtungswechsel (in Form von Winkelbögen) von bis zu 45° üblich sind, wobei beim Einziehen eines Sanierungsschlauches im Bereich des Revisionsschachtes häufig sogar ein Richtungswechsel von 90° vorgenommen werden muß, sind Spiralschläuche bislang zur Sanierung von Rohrleitungen bzw. Abwasserkanälen nicht zum Einsatz gelangt, was der unter den Ziffern 1 bis 6 dargelegte Stand der Technik belegt.

Die Aufgabe der Erfindung besteht nun darin, für die Sanierung von Rohrleitungen, insbesondere von Abwasserkanälen, einen Schlauch bereitzustellen, der sich leicht, schnell und bei geringer Betriebsausfallzeit einziehen läßt und sich dabei jedem Rohrbogen anpaßt, ohne daß es in diesem Problembereich der Rohrleitungssanierung zu einer Querschnittsverminderung des Schlauches durch Abknicken kommt. Darüber hinaus muß der Schlauch für Reparaturzwecke herausziehbar sein, damit ohne großen Aufwand eine Erneuerung vorgenommen werden kann.

Mit dem Einsatz eines Schlauches gemäß Kennzeichen des Anspruchs 1 ist nun die Grundvoraussetzung zur Lösung dieser Aufgabe gegeben. Der erfindungsgemäße Schlauch, der einen völlig neuen Weg der Rohrleitungssanierung eröffnet, zeichnet sich durch folgende Besonderheiten aus:

Der erfindungsgemäße Schlauch ist noch bis zu einem Biegeradius $R$ = 0,2 bis 2 d (unterer Grenzbereich) querschnittsstabil. Ein derartiger Schlauch ist somit hochflexibel, da er sich den im Rohrleitungsnetz üblichen Richtungswechseln anpaßt. Auch ein Einziehen des Schlauches im Bereich des Revisionsschachtes ist problemlos möglich.
- Durch die Eigensteifigkeit des spiralförmigen Verstärkungselementes entfällt das "Verdämmen". Darunter versteht man das Ausfüllen des nach dem Einziehen des Schlauches verbleibenden Restraumes zwischen Schlauchaußenwand und der Innenwand des Rohres bzw. Abwasserkanals durch ein zusätzliches Material. Dadurch ist es möglich, den Schlauch zwecks späterer Reparaturmaßnahmen (z.B. durch Austausch des defekten Schlauches) wieder herauszuziehen.
- Im Gegensatz zu dem Schlauch nach der DE-A-26 29 214 ist der erfindungsgemäße Spiralschlauch für Vakuumeinsatz geeignet.
- Wegen seiner hohen Flexibilität ist es möglich, den Schlauch bei Kenntnis der Maße des zu sanierenden Rohrleitungsnetzes bereits unmittelbar nach seiner Herstellung auf die geforderte Sanierungslänge auszurichten. Für den Fall, daß die Produktionslänge geringer ist als die Länge des zu sanierenden Rohres, werden einzelne Schlauchabschnitte mit Hilfe eines kurzen Kunststoffrohrzwischenstückes, das haftend mit der Schlauchinnenwand verbunden ist, auf ein transportables Maß verlängert.

Eine weitere Verlängerung kann vor Ort vor dem Einziehen des Schlauches vorgenommen werden, indem kurze Kunststoffrohre, die ein integriertes Endteil der Schlauchabschnitte sind, miteinander verbunden werden (z.B. durch Verschweißen). Über die Bedeutung dieser Kunststoffrohre, insbesondere bei der Herstellung des Abzweiges, wird an späterer Stelle noch detailliert eingegangen.

- Der hochflexible Schlauch kann eingeschwommen werden. Der Abwasserkanal kann also in sehr vielen Fällen während des Einziehens im Betrieb bleiben. Der Arbeitsgang des Schlaucheinziehens kann je nach Leitungsverhältnissen in weniger als 60 Minuten beendet sein. Für diesen Arbeitsgang werden keine teueren und komplizierten Spezialmaschinen benötigt. Eine vollständige oder teilweise Betriebsunterbrechung beschränkt sich somit nur auf Verfahrensmaßnahmen, die mit der Herstellung eines Abzweiges sowie der Anschlüsse (z.B. Schacht- und Betriebsanschlüsse) verbunden sind.

- Der erfindungsgemäße Schlauch aus Gummi oder gummiähnlichem Werkstoff läßt den Einsatz verschiedener Qualitäten zu, die den chemischen oder thermischen Belastungen angepaßt werden. Ein zweckmäßiger Schlauchwerkstoff ist beispielsweise eine Kautschukmischung auf Basis Polychloropren (Baypren).

Zweckmäßige Ausgestaltungen des Schlauches sind in den Unteransprüchen 2 bis 19 genannt. Auf zweckmäßige Verfahren zur Schlauchverlängerung, zum Einziehen des Schlauches sowie zur Herstellung von Anschlüssen und Abzweigen gehen die Unteransprüche 20 bis 28 ein.

Die Erfindung wird im folgenden anhand von Ausführungsbeispielen unter Bezugnahme auf schematische Zeichnungen näher erläutert. Es zeigen:

Fig. 1, 2  den Schlauchaufbau in Längsschnitt gesehen;

Fig. 3 bis 7  Details über den Schlauchaufbau;

Fig. 8  das Verfahren zum Einziehen des Schlauches;

Fig. 9, 10  Kunststoffrohrstücke zum Verbinden von Schlauchabschnitten in Längsschnitt gesehen;

Fig. 11 bis 19  das Verfahren zur Bildung eines Abzweiges;

Fig. 20, 21  Anschlüsse am Schacht;

Fig. 22, 23  Betriebsanschlüsse.

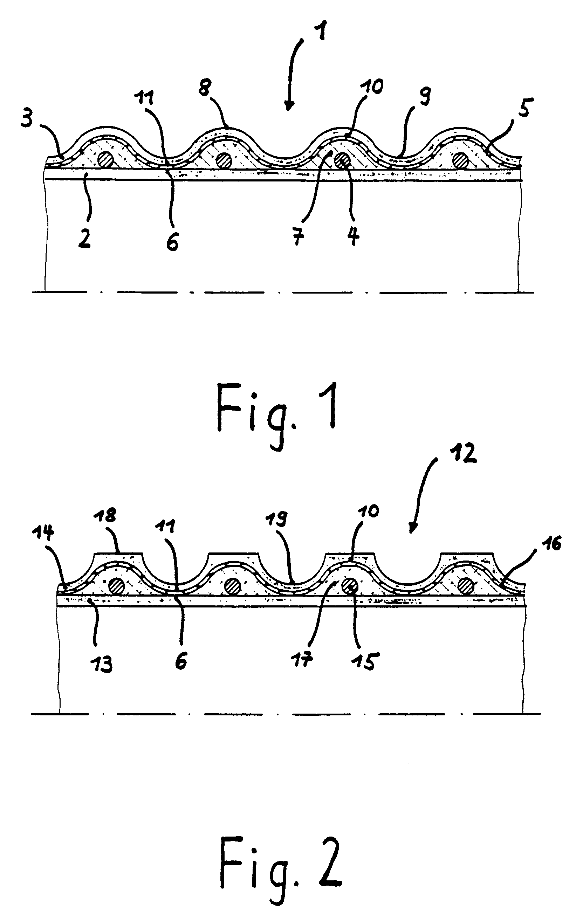

Nach Fig. 1 besteht der hochflexible Schlauch (1) aus der Seele (2) und der Decke (3), zwischen denen der Spiraldraht (4) und der wellenförmig eingearbeitete Druckträger (5) aus textilem Werkstoff als Verstärkungselemente eingebettet sind. Der Druckträger (5) steht an seinem tiefsten Punkt (6) mit der Schlauchseele (2) in direkter Verbindung. Zwischen der Schlauchseele (2) und dem Druckträger (5) befindet sich die einstückig ausgebildete Polsterung (7), in der der Spiraldraht (4) in unmittelbarer Nähe der Schlauchseele (2) eingebettet ist. Die Schlauchdecke (3) selbst ist als Rippen-Rillen-System ausgebildet, wobei jeweils die Rippen (8) im Bereich der Druckträgererhebungen (10) und die Rillen (9) im Bereich der Druckträgervertiefungen (11) angeordnet sind.

Der Schlauch (12) nach Fig. 2 mit Seele (13), Decke (14), Spiraldraht (15), Druckträger (16) und Polsterung (17) unterscheidet sich von dem nach Fig. 1 lediglich dadurch, daß die Rippen (18) kronenförmig und die Rillen (19) bogenförmig ausgebildet sind.

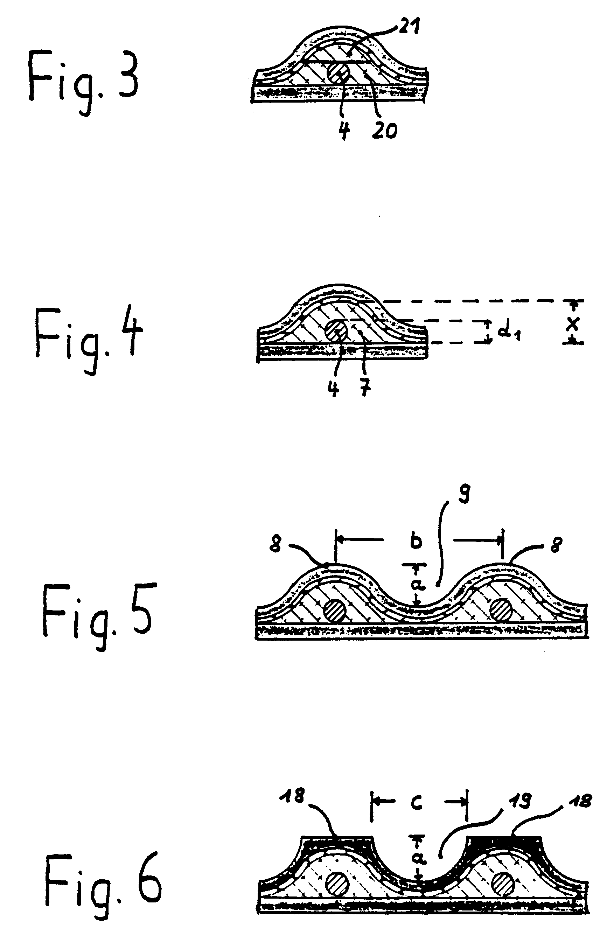

Fig. 3 zeigt eine zweistückig ausgebildete Polsterung. Dabei besteht sowohl die Innen- als auch die Außenpolsterung zweckmäßigerweise aus Gummi oder gummiähnlichem Werkstoff, wobei die Härte in Shore A der Innenpolsterung (20) 30 bis 50 und die der Außenpolsterung (21) 70 oder mehr beträgt. Der Spiraldraht (4) ist hier in der Innenpolsterung (20) eingebettet.

Die Fig. 4 bis 7 zeigen quantitative Beziehungen hinsichtlich des Schlauchaufbaus. Diese sind:

Fig. 4  $d_1 : X = 1 : 1,5$ bis $1 : 3$
(insbesondere $1 : 2$)

Fig. 5  $a : b = 1 : 2$ bis $1 : 6$
(insbesondere $1 : 4$)

Fig. 6  $a : c = 1 : 1$ bis $1 : 3$
(insbesondere $1 : 2$)

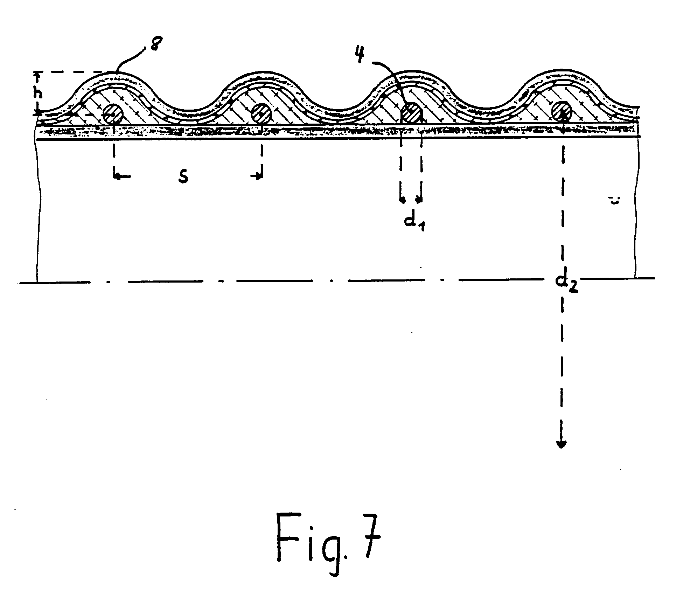

Fig. 7  $h : s = 1 : 2$ bis $1 : 6$
(insbesondere $1 : 4$)

$d_1 : d_2 = 1 : 30$ bis $1 : 80$
(insbesondere $1 : 40$ bis $1 : 70$)

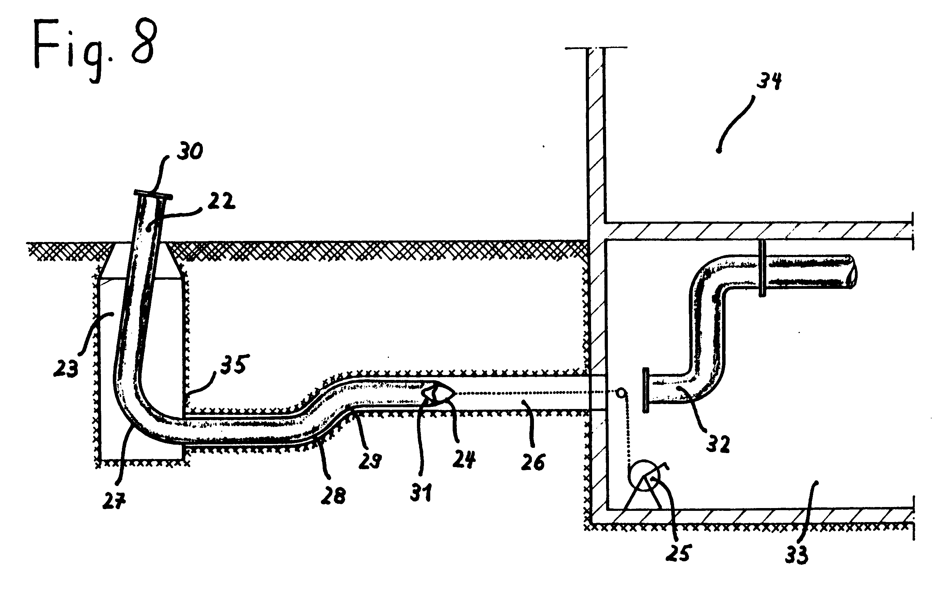

Nach Fig. 8 wird ein Schlauch (22) in den Revisionsschacht (23) eingelassen und mit Hilfe einer Ziehlasche (24) und eines Drehkörpers (25) durch das zu sanierende Rohr (26) gezogen. Im Rahmen dieser Fig. sind drei Richtungswechsel veranschaulicht, u.z. im Bereich des Revisionsschachtes (23) mit der Schlauchkrümmung (27) von etwa 90° sowie innerhalb des Rohres (26) mit den Schlauchkrümmungen (28, 29) mit jeweils etwa 45°. Mit dem erfindungsgemäßen Schlauchaufbau - hier nicht dargestellt - wird erreicht, daß der Schlauch selbst an den Krümmungsstellen (27, 28, 29) querschnittsstabil ist. Ein konstanter Strömungsquerschnitt ist somit gewährleistet. Der Schlauch (22) weist an seinen Enden Flansche (30, 31) auf, wobei der Flansch (31) aus hochflexiblem Werkstoff besteht. Während des Durchziehens des Schlauches durch das Rohr wird der Flansch (31) nach innen gekrempelt. Der Flansch (31) wird später mit dem Betriebsanschluß (32), der sich hier im Keller (33) des Gebäudes (34) befindet, verbunden. Der Flansch (30) dagegen wird an der Schachtwand (35) befestigt.

Im Rahmen der Fig. 8 ist ein Schlauch dargestellt, der über die gesamte Sanierungslänge einstückig ausgebildet ist. Häufig ist es jedoch erforderlich, daß wegen der begrenzten Herstellungslänge einzelne Schlauchabschnitte mit Hilfe eines kurzen Rohrstückes miteinander verbunden werden.

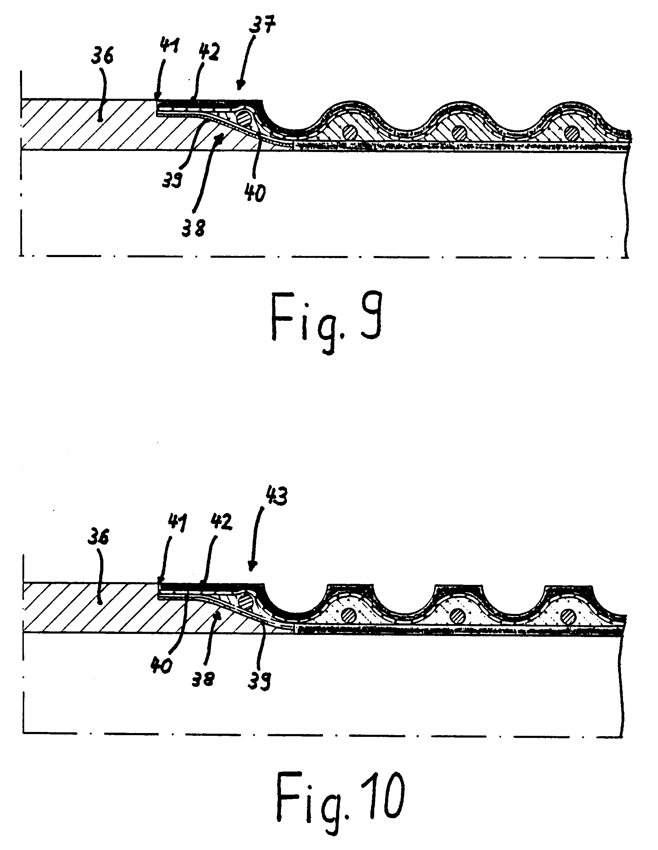

Die Fig. 9 und 10 zeigen ein Kunststoffrohr (36), das zweckmäßigerweise aus PE, PU, ABS oder fluorhaltigem Kunststoff besteht und das haftend mit der Innenwand der Schlauchenden (37, 43) verbunden ist, u.z. insbesondere durch Vulkanisation. Das gesamte Haftsystem (38) ist hier zweischichtig ausgebildet, u.z. in Form der Innenschicht (39), die aus einer nichtvernetzten Folie (z.B. Polyethylenfolie bei Verwendung eines PE-Rohres) besteht, sowie der darüberliegenden Schicht (40) aus Kautschuk (z.B. EPDM, SBR, NBR, H-NBR, CR, BR, CSM, FKM, EVA, NR, IR, IIR, CIIR, BrIIR, Verschnitte dieser Kautschuktypen). Das Kunststoffrohr (36) ist so ausgebildet, daß im Übergangsbereich (41) eine stufenlose Oberflächenausbildung des Kunststoffrohres und der Schlauchdecke (42) gegeben ist. Das Kunststoffrohr kann als fertiges Zwischenstück dazu benutzt werden, Schlauchabschnitte unmittelbar nach deren Herstellung miteinander zu verbinden. Das Verlängern der Schläuche kann auch dadurch erfolgen, daß zwei Kunststoffrohre als jeweilige Endstücke der miteinander zu verknüpfenden Schlauchabschnitte vor Ort, d.h. vor dem Einziehen des Schlauches in die zu sanierende Rohrleitung, zusammengeschweißt werden.

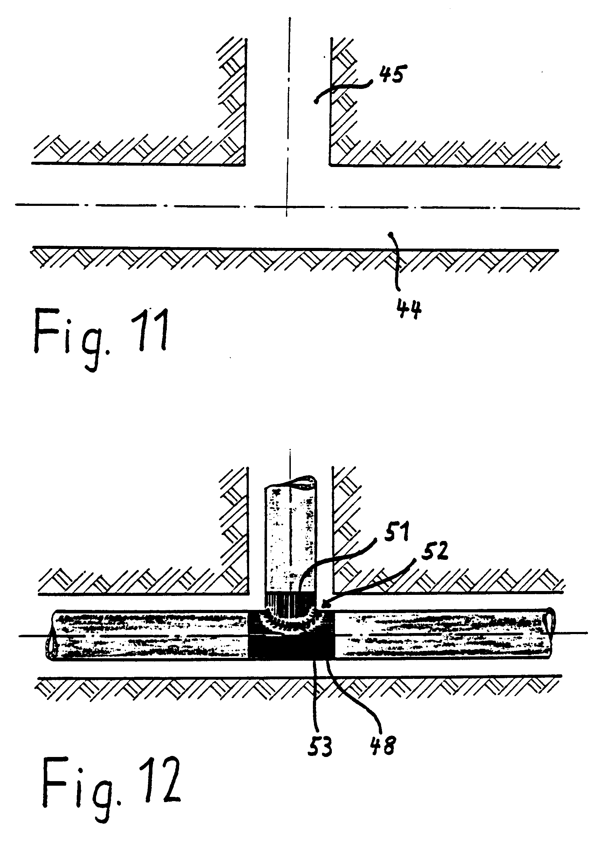

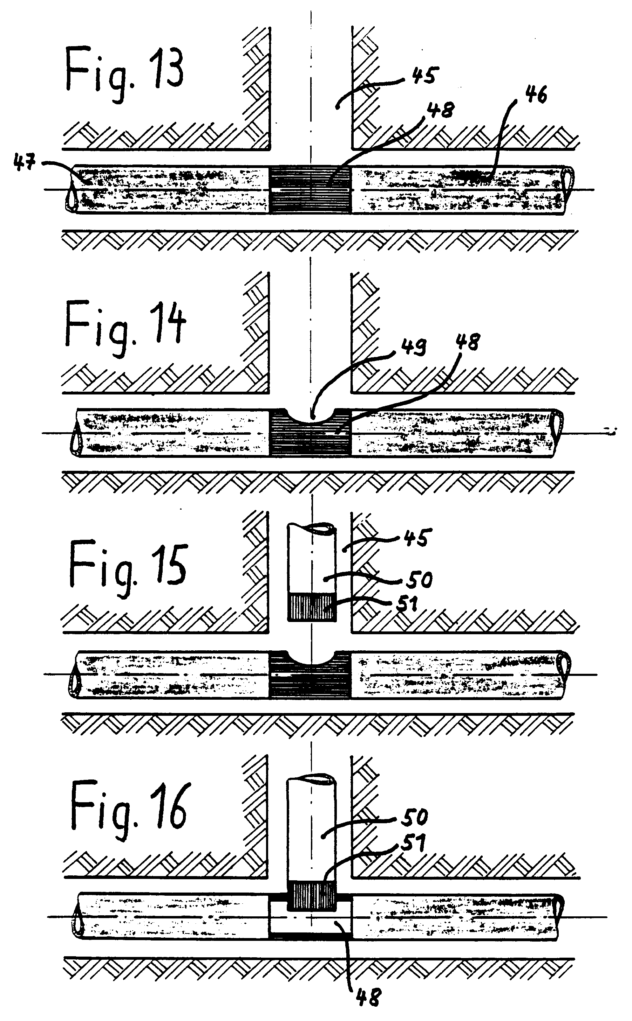

Fig. 11 zeigt einen Abwasserkanal (44) mit Abzweiger (45). An einer vorher vorgegebenen Stelle wird in die Schlauchlänge ein Kunststoffrohrzwischenstück eingearbeitet. Dieses Rohr ist haftend mit dem Schlauch verbunden. Nach Fertigstellung wird der Schlauch, der aus den Schlauchabschnitten (46, 47) zusammengesetzt ist, in die defekte Rohrleitung eingezogen. Dabei kommt das Kunststoffrohr (48) genau am Abzweiger (45) zu liegen (Fig. 13). Die Position wird mit entsprechenden Sensoren überprüft. Mit einem Spezialwerkzeug wird bei korrekter Lage in das Rohr (48) eine Bohrung (49) eingebracht (Fig. 14).

Anschließend wird der zweite Schlauch (50) in den Abzweiger (45) eingezogen, wobei der Schlauch mit einem Kunststoffrohr (51) an der Spitze versehen ist (Fig. 15). Der Schlauch (50) wird soweit eingezogen, bis das Kunststoffrohr (51) in das Kunststoffrohrzwischenstück (48) hineinragt (Fig. 16).

Hinsichtlich der weiteren Bearbeitung gibt es zwei Verfahrensvarianten:

Variante A: Die Abzweigstelle (52) wird gereinigt. Anschließend werden die Kunststoffrohrstücke (48, 51) verschweißt, u.z. unter Bildung der Schweißnaht (53) (Fig. 12).

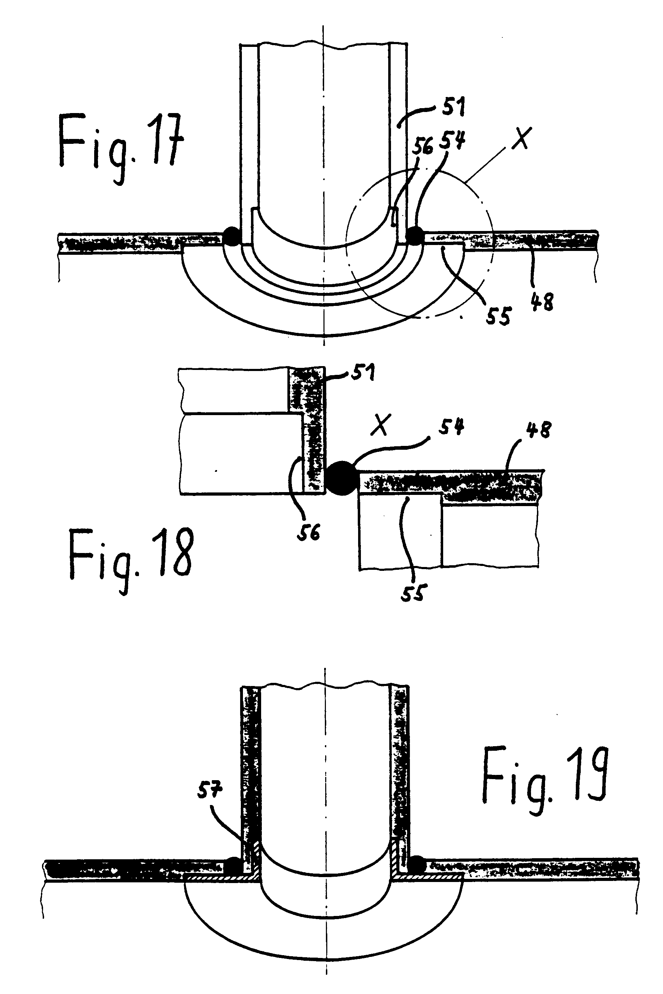

Variante B: Nach dem Einziehen der Schläuche wird im Bohrungsbereich die verbleibende Öffnung zwischen den Kunststoffrohrstücken (48, 51) mit einer dauerelastischen Masse (54) abgedichtet (z.B. durch Verspritzen). Anschließend wird das hineinragende Rohrstück (51) bündig mit dem anderen Rohr (48) abgeschnitten. Danach wird die Abzweigstelle gereinigt. Anschließend werden die Innenflächen der Rohrstücke (48, 51) im Abzweigbereich unter Bildung von Aussparungen (55, 56) ausgefräßt (Fig. 17, 18). In diese Aussparungen wird dann ein T-Stück (57) eingebracht, u.z. durch Anspritzen, Einkleben oder mit Hilfe mechanischer Verbindungs-Systeme (Fig. 19). Der Werkstoff des T-Stückes (57) besteht aus PE, PU, ABS oder fluorhaltigem Kunststoff.

Bei beiden Verfahren wird anschließend der Schlauchabzweig so nachgearbeitet, daß kein Absatz entsteht.

Das Verfahren der Variante B wird vor allem bei starken Verschmutzungen und nachfließendem Schmutz angewandt.

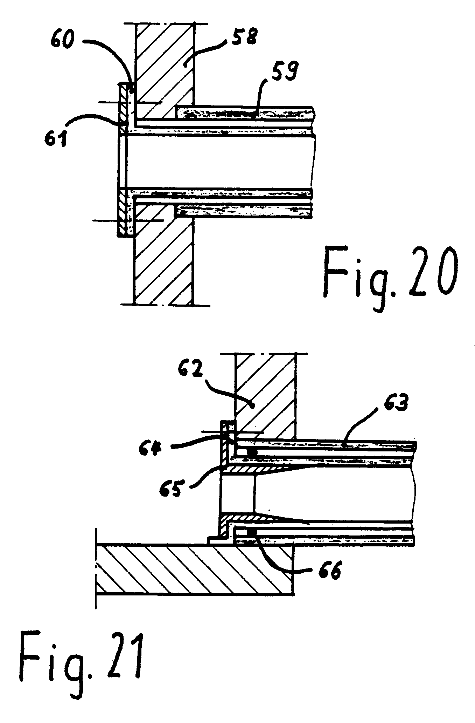

Die Fig. 20 bis 23 zeigen folgende Anschlußdetails:

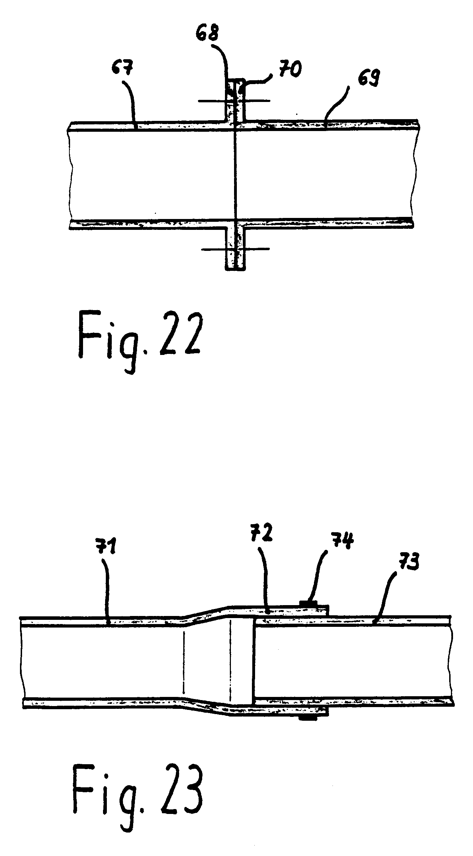

Schachtanschlüsse (Fig. 20, 21)
Schachtwand (58)
Schachtwand (62) mit sohlengleichem Anschluß
Schlauchenden (59, 63)
Gummiflansch (60, 64)
Losflansch (61), z.B. aus Stahl oder HDPE
Aussteifungsring (65)
Rollring (66)
Betriebsanschlüsse (Fig. 22, 23)
Schlauchende (67) mit Gummiflansch (68)
Betriebsanschluß (69) mit Flansch (70)
Schlauch (71) mit muffenförmiger Endausbildung (72)
Betriebsanschluß (73) ohne Flansch
Spannschelle (74)

**Patentansprüche**

1. Schlauch aus Gummi oder gummiähnlichem Werkstoff mit eingebetteten Verstärkungselementen zur Sanierung von Rohrleitungen, insbesondere von Abwasserkanälen, wobei der hochflexible und bei jedem Richtungswechsel querschnittsstabile Schlauch (1, 12) in die Rohre eingezogen wird, wobei ferner der Schlauch (1, 12) folgenden Aufbau aufweist:
   a) zwischen der Schlauchseele (2, 13) und der Schlauchdecke (3, 14) befinden sich zwei Verstärkungssysteme, wobei das innere Verstärkungssystem ein Spiraldraht (4, 15) und das äußere Verstärkungssystem ein wellenförmiger Druckträger (5, 16) ist;
   b) zwischen der Schlauchseele (2, 13) und dem Druckträger (5, 16) befindet sich eine Polsterung (7, 17), in der der Spiraldraht (4, 15) eingebettet ist;
   c) die Schlauchdecke (3, 14) ist als Rippen-Rillen-System ausgebildet, wobei jeweils die Rippen (8, 18) im Bereich der Druckträgererhebungen (10) und die Rillen (9, 19) im Bereich der Druckträgervertiefungen (11) angeordnet sind;
dadurch gekennzeichnet, daß
   d) der Spiraldraht (4, 15) in unmittelbarer Nähe der Schlauchseele (2, 13) verläuft;
   e) der Druckträger (5, 16) an seinem tiefsten Punkt (6) mit der Schlauchseele (2, 13) in direkter Verbindung steht.

2. Schlauch nach Anspruch 1, dadurch gekennzeichnet, daß der Spiraldraht (4, 15) aus Stahl; Edelstahl oder Kunststoff (z.B. Polyamid oder fluorhaltigem Kunststoff) besteht.

3. Schlauch nach Anspruch 1 oder 2, dadurch gekennzeichnet, daß hinsichtlich des Abstandes h zwischen Spiraldraht (4, 15) und dem höchsten Punkt der Rippen (8, 18) sowie des Spiraldrahtabstandes s folgende Parameter gelten, wobei jeweils der Querschnittsmittelpunkt des Spiraldrahtes Bezugspunkt ist:

   $h : s = 1 : 2$ bis $1 : 6$
   (insbesondere $1 : 4$)

4. Schlauch nach einem der Ansprüche 1 bis 3, dadurch gekennzeichnet, daß hinsichtlich des Durchmessers $d_1$ des Spiraldrahtes (4, 15) zur Maximaldicke X der Polsterung (7, 17) folgende Parameter gelten:

   $d_1 : X = 1 : 1,5$ bis $1 : 3$
   (insbesondere $1 : 2$)

5. Schlauch nach einem der Ansprüche 1 bis 4, dadurch gekennzeichnet, daß das Verhältnis von Durchmesser $d_1$ des Spiraldrahtes (4, 15) zum mittleren Durchmesser $d_2$ der Spirale folgende Parameter gelten:

   $d_1 : d_2 = 1 : 30$ bis $1 : 80$
   (insbesondere $1 : 40$ bis $1 : 70$)

6. Schlauch nach einem der Ansprüche 1 bis 5, dadurch gekennzeichnet, daß der Druckträger (5, 16) aus textilem und/oder metallischem Werkstoff besteht.

7. Schlauch nach Anspruch 6, dadurch gekennzeichnet, daß der Druckträger aus einem monofilen oder multifilen Material besteht.

8. Schlauch nach einem der Ansprüche 1 bis 7, dadurch gekennzeichnet, daß die Polsterung (7, 17) aus elastomerem und/oder textilem Werkstoff besteht.

9. Schlauch nach einem der Ansprüche 1 bis 8, dadurch gekennzeichnet, daß die Polsterung aus Segmenten, insbesondere aus einem Innen- (20) und Außensegment (21) besteht, wobei sich die Polstersegmente durch unterschiedliche Werkstoffeigenschaften auszeichnen.

10. Schlauch nach Anspruch 9, dadurch gekennzeichnet, daß die Innen- und Außenpolsterung aus Gummi oder gummiähnlichem Werkstoff besteht, wobei die Härte in Shore A der Innenpolsterung (20) 30 bis 50 und die der Außenpolsterung (21) 70 oder mehr beträgt.

11. Schlauch nach einem der Ansprüche 1 bis 10, dadurch gekennzeichnet, daß die Rippen (8) und Rillen (9) wellenförmig verlaufen.

12. Schlauch nach Anspruch 11, dadurch gekennzeichnet, daß hinsichtlich der maximalen Tiefe a der Rillen (9) und des Abstandes b zwischen dem höchsten Punkt zwei benachbarter Rippen (8) folgende Parameter gelten:

   $a : b = 1 : 2$ bis $1 : 6$
   (insbesondere $1 : 4$)

13. Schlauch nach einem der Ansprüche 1 bis 10, dadurch gekennzeichnet, daß die Rippen (18) kronenförmig und die Rillen (19) bogenförmig ausgebildet sind.

14. Schlauch nach Anspruch 13, dadurch gekennzeichnet, daß hinsichtlich der maximalen Tiefe a sowie der maximalen Breite c der Rillen (19) folgende Parameter gelten:

a : c = 1 : 1 bis 1 : 3
(insbesondere 1 : 2)

15. Schlauch nach einem der Ansprüche 1 bis 14, dadurch gekennzeichnet, daß dieser aus einer Kautschukmischung auf der Basis von Polychloropren (CR), Naturkautschuk (NR), Etylen-Propylen-Dien-Mischpolymerisat (EPDM), Styrol-Butadien-Kautschuk (SBR), Fluorkautschuk (FKM), Isopren-Kautschuk (IR), Butadien-Kautschuk (BR), Nitrilkautschuk (NBR), Butylkautschuk (IIR), chloriertem oder bromiertem Butylkautschuk (ClIIR bzw. BrIIR), chlorsulfoniertem Polyethylen (CSM), Ethylen-Vinylacetat-Kautschuk (EVA), hydriertem Nitrilkautschuk (H-NBR) oder Verschnitten dieser Kautschuktypen besteht.

16. Schlauch nach einem der Ansprüche 1 bis 15, dadurch gekennzeichnet, daß ein kurzes Kunststoffrohrstück (36) in die Enden (37, 43) von Schlauchabschnitten eingearbeitet ist, wobei das Rohrstück haftend mit der Schlauchinnenwand verbunden ist.

17. Schlauch nach Anspruch 16, dadurch gekennzeichnet, daß das Kunststoffrohrstück (36) aus Polyethylen (PE), Polyurethan (PU), ABS-Polymerisat oder fluorhaltigem Kunststoff besteht.

18. Schlauch nach Anspruch 16 oder 17, dadurch gekennzeichnet, daß die Haftung auf der Basis eines zweischichtigen Haftsystems (38) beruht, wobei die Innenschicht (39) eine nichtvernetzte Folie ist und die Außenschicht (40) aus Kautschuk besteht.

19. Schlauch nach einem der Ansprüche 1 bis 18, dadurch gekennzeichnet, daß die Zugseile in die Schlauchenden einvulkanisiert sind.

20. Verfahren zum Verlängern eines Schlauches gemäß Aufbau nach Anspruch 16, dadurch gekennzeichnet, daß die Kunststoffrohre als jeweilige Endstücke der miteinander zu verknüpfenden Schlauchabschnitte zusammengeschweißt werden.

21. Verfahren zum Einziehen des Schlauches gemäß Aufbau nach einem der Ansprüche 1 bis 19, dadurch gekennzeichnet, daß der Vorgang des Schlaucheinziehens bei gefluteten Rohren (Einschwimmen des Schlauches) oder bei nicht gefluteten Rohren erfolgt.

22. Verfahren zum Herstellen eines Abzweiges eines Schlauches gemäß Aufbau nach Anspruch 16, gekennzeichnet durch folgende Verfahrensschritte:

a) nach dem Durchziehen des Schlauches, der aus den Schlauchabschnitten (46, 47) zusammengesetzt ist, kommt das Kunststoffrohrzwischenstück (48) genau am Abzweiger (45) des zu sanierenden Rohrleitungsnetzes zu liegen;
b) in das Zwischenstück (48) wird eine Bohrung (49) eingebracht;
c) der Abzweigschlauch (50), der an der Spitze mit einem Kunststoffrohr (51) versehen ist, wird durch das Abzweigrohr (45) gezogen, bis das Kunststoffrohr des Abzweigschlauches in die Bohrung (49) des Rohrzwischenstückes (48) hineinragt;
d) die Kunststoffrohrstücke (48, 51) werden verschweißt (Variante A) oder die verbleibende Öffnung zwischen den Kunststoffrohrstücken (48, 51) im Bohrungsbereich wird mit einer dauerelastischen Masse (54) abgedichtet, wobei das hineinragende Rohrstück (51) bündig mit dem Zwischenrohrstück (48) abgeschnitten wird, die Innenflächen der Kunststoffrohrstücke (48, 51) im Abzweigbereich unter Bildung von Aussparungen (55, 56) aufgefräst werden und schließlich in diese Aussparungen ein Abzweigstück (57) eingebracht wird (Variante B).

23. Verfahren zum Herstellen eines Anschlusses für einen Schlauch gemäß Aufbau nach einem der Ansprüche 1 bis 19, dadurch gekennzeichnet, daß nach dem Durchziehen des Schlauches durch das Rohr endständige Flansche angesetzt werden, wobei das Ansetzen der Flansche insbesondere durch Vulkanisation oder durch Verkleben erfolgt.

24. Verfahren zum Herstellen eines Anschlusses für einen Schlauch gemäß Aufbau nach einem der Ansprüche 1 bis 19, dadurch gekennzeichnet, daß der Schlauch (22) mit nach innen einkrempelbaren Flanschen (31) aus hochflexiblem Werkstoff durch das Rohr gezogen wird, wobei der Flansch insbesondere einstückig mit dem Schlauch (22) ausgebildet ist.

25. Verfahren nach Anspruch 23 oder 24, dadurch gekennzeichnet, daß das Anschließen eines Schlauchendes an eine Schachtwand oder eines Betriebsanschlusses mittels Losflansche (61) oder, insbesondere bei sohlengleichem Anschluß*, mittels eines Kombinationssystems aus Aussteifungsring (65) und Rollring (66) erfolgt.

26. Verfahren zum Herstellen eines Anschlusses für einen Schlauch gemäß Aufbau nach einem der Ansprüche 1 bis 19, dadurch gekennzeichnet, daß nach dem Durchziehen des Schlauches durch das Rohr das Anschließen eines flanschlosen Schlauchendes an eine Schachtwand mit Hilfe eines Kombinationssystems aus Spannring und Rollring erfolgt.

27. Verfahren zum Herstellen eines Anschlusses für einen Schlauch gemäß Aufbau nach einem der Ansprüche 1 bis 19, dadurch gekennzeichnet, daß nach dem Durchziehen des Schlauches mit muffenförmiger Ausbildung des Schlauchendes durch das Rohr die Schlauchmuffe (72) auf das Ende des Betriebsanschlusses (73) gezogen wird, wobei die Befestigung insbesondere mit Hilfe einer Spannschelle (74) erfolgt.

28. Verfahren zum Herstellen eines Anschlusses für einen Schlauch gemäß Aufbau nach Anspruch 16, dadurch gekennzeichnet, daß nach dem Einziehen des Schlauches an das Kunststoffrohrstück (36) ein Endstück angeschweißt, angeschraubt (z.B. mittels Steckverbindung, Rastersystem) oder angeklebt wird.

## Claims

1. A flexible pipe of rubber or rubberlike material with reinforcing
   elements embedded in it, intended for the restoration of conduits, in particular sewers, for doing which the flexible pipe (1, 12) which is highly flexible and stable in cross-section at any change in direction is drawn into the conduit, the flexible pipe (1, 12) exhibiting the following construction:
   a) between the core (2, 13) and the cover (3, 14) of the flexible pipe lie two systems of reinforcement, the inner system of reinforcement being a spiral wire (4, 15) and the outer system of reinforcement being an undulating pressure-carrier (5, 16);
   b) between the core (2, 13) of the flexible pipe and the pressure-carrier (5, 16) lies a padding (7, 17) in which the spiral wire (4, 15) is embedded;
   c) the covering (3, 14) of the flexible pipe is made as a rib-and-trough system, the ribs (8, 18) being arranged in each case in the region of the elevations (10) of the pressure-carrier and the troughs (9, 19) in the region of the depressions (11) in the pressure-carrier;
   characterized in that
   d) the spiral wire (4, 15) runs directly next to the core (2, 13) of the flexible pipe;
   e) the pressure-carrier (5, 16) at its lowest point (6) lies in direct contact with the core (2, 13) of the flexible pipe.

2. A flexible pipe as in Claim 1, characterized in that
   the spiral wire (4, 15) consists of steel, stainless steel or plastics (e.g., polyamide or fluorine-containing plastics).

3. A flexible pipe as in Claim 1 or 2, characterized in that
   as regards the distance $h$ between the spiral wire (4, 15) and the highest point of the ribs (8, 18) as well as the pitch $s$ of the spiral wire the following parameters apply, the centre of the cross-section of the spiral wire being the reference point in each case:

   $h : s = 1 : 2$ to $1 : 6$
   (in particular $1 : 4$)

4. A hose as in one of the Claims 1 to 3, characterized in that
   as regards the ratio of the diameter $d_1$ of the spiral wire (4, 15) to the maximum thickness X of the padding (7, 17) the following parameters apply:

   $d_1 : X = 1 : 1.5$ to $1 : 3$
   (in particular $1 : 2$)

5. A hose as in one of the Claims 1 to 4, characterized in that
   the ratio of the diameter $d_1$ of the spiral wire (4, 15) to the average diameter $d_2$ of the spiral the following parameters apply:

   $d_1 : d_2 = 1 : 30$ to $1 : 80$
   (in particular $1 : 40$ to $1 : 70$)

6. A hose as in one of the Claims 1 to 5, characterized in that
   the pressure-carrier (5, 16) consists of textile and/or metallic material.

7. A hose as in Claim 6, characterized in that
   the pressure carrier consists of a mono- or multifilament material.

\* an eine Schachtwand

8. A hose as in one of the Claims 1 to 7. characterized in that

the padding (7, 17) consists of elastomeric and/or textile material.

9. A hose as in one of the Claims 1 to 8, characterized in that

the padding consists of segments, in particular of an inner segment (20) and an outer segment (21), the segments of the padding being distinguished by different material properties.

10. A hose as in Claim 9, characterized in that

the inner and outer padding consists of rubber or rubberlike material, the Shore A hardness of the inner padding (20) amounting to 30 to 50 and that of the outer padding (21) to 70 or more.

11. A hose as in one of the Claims 1 to 10, characterized in that

the ribs (8) and troughs (9) run in waves.

12. A hose as in Claim 11, characterized in that

as regards the maximum depth $a$ of the troughs (9) and the distance $b$ between the highest points of two adjacent ribs (8) the following parameters apply:

$a : b$ = 1 : 2 to 1 : 6
(in particular 1 : 4)

13. A hose as in one of the Claims 1 to 10, characterized in that

the ribs (18) are made in the shape of crowns and the toughs (19) are made arcuate.

14. A hose as in Claim 13, characterized in that

as regards the maximum depth $a$ as well as the maximum width $c$ of the troughs (19) the following parameters apply:

$a : c$ = 1 : 1 to 1 : 3
(in particular 1 : 2)

15. A hose as in one of the Claims 1 to 14, characterized in that

it consists of a rubber mixture on the basis of polychloroprene (CR), natural rubber (NR), ethylene-propylene-diene-copolymer (EPDM), styrene-butadiene rubber (SBR), fluorocaoutchouc (FKM), isoprene rubber (IR), butadien rubber (BR), nitrile rubber (NBR), butyl rubber (IIR), chlorinated or brominated butyl rubber (CIIR resp. BrIIR), chlorosulphonated polyethylene (CSM), ethylene-vinyl acetate rubber (EVA), hydrogenated nitrile rubber (H-NBR) or waste from these types of rubber.

16. A hose as in one of the Claims 1 to 15, characterized in that

short pieces (36) of plastics tube are incorporated into the respective ends (37, 43) of portions of hose, the piece of tube being connected by adhesive to the inner wall of the hose.

17. A hose as in Claim 16, characterized in that

the piece (36) of plastics tube consists of polyethylene (PE), polyurethane (PU), ABS copolymer or fluorine-containing plastics.

18. A hose as in Claim 16 or 17, characterized in that

the adhesion depends upon the basis of an adhesive system (38) in two layers, the inner layer (39) being a non-reticulated foil and the outer layer (40) consisting of rubber.

19. A hose as in one of the Claims 1 to 14, characterized in that

the rope for hauling is vulcanized into the ends of the hose.

20. A method of extending a hose in accordance with the

construction as in Claim 16, characterized in that the plastics tubes as the respective endpieces of the portions of hose to be joined together are welded together.

21. A method of pulling in the hose in accordance with the

construction as in one of the Claims 1 to 19, characterized in that the procedure Of pulling in the hose is effected with the conduits flooded (floating the hose in) or not flooded.

22. A method of producing a branch off a hose in accordance with the

construction as in Claim 16, characterized by the following steps of the method:
a) after pulling through the hose which is composed of the portions of hose (46, 47), the intermediate piece (48) of plastics tube comes to lie exactly at the branch (45) off the conduit network which is to be restored;
b) a hole (49) is drilled in the intermediate piece (48);
c) the branch hose (50) which is provided at the tip with a plastics tube (51), is pulled through the branch conduit (45) until the plastics tube on the branch hose projects into the hole (49) drilled in the intermediate piece (48) of tube;

d) the pieces (48, 51) of plastics tube are welded (Variant A) or the opening remaining between the pieces (48, 51) of plastics tube is sealed in the region of the drilled hole with a permanently elastic substance (54), whereupon the piece (51) of tube projecting into the intermediate piece (48) of tube is cut off flush with the latter and the inner faces of the pieces (48, 51) of plastics tube in the region of the branch are countersunk to form recesses (55, 56) and finally a branchpiece (57) is fitted into the said recesses (Variant B).

23. A method of producing a connection for a hose in accordance with the

construction as in one of the Claims 1 to 19, characterized in that after pulling the hose through the conduit permanent end flanges are fitted, the fitting of the flanges being effected especially through vulcanization or gluing.

24. A method of producing a connection for a hose in accordance with the

construction as in one of the Claims 1 to 19, characterized in that the hose (22) is pulled through the conduit with flanges (31) of highly flexible material which may be crumpled inwards, the flange being made in particular in one piece with the hose (22).

25. A method as in Claim 23 or 24, characterized in that

the connection of the end of a hose to the wall of a manhole or a service connection is effected by means of loose flanges (61) or especially in the case of a connection to a manhole wall level with the bottom, by means of a combined system of stiffener ring (65) and roller cage (66)

26. A method of producing a connection for a hose in accordance with the

construction as in one of the Claim 1 to 19, characterized in that after pulling the hose through the conduit the connection of a flangeless end of the hose to a manhole wall is effected by means of a combined system of clamping ring and roller cage.

27. A method of producing a connection for a hose in accordance with the

construction as in one of the Claim 1 to 19, characterized in that after the hose which has a construction of the end of the hose in the form of a socket has been pulled through the conduit the socket (72) on the hose is pulled to the end of the service connection (73), fastening being effected in particular by means of a clamping strap (74).

28. A method of producing a connection for a hose in accordance with the

construction as in Claim 16, characterized in that after the hose has been pulled in an endpiece is welded, screwed (e.g., by means of a plug connection, grid system) or glued to the piece (36) of plastics tube.

**Revendications**

1. Tuyau flexible en caoutchouc ou en une matière similaire au caoutchouc, avec des éléments de renforcement incorporés, pour la rénovation de conduites rigides, en particulier de canaux des eaux d'égout, le tuyau (1, 12) à haute flexibilité et à section transversale stable lors de chaque changement de direction étant inséré dans les conduites en tirant, le tuyau flexible (1, 12) présentant en outre la structure suivante :

a) deux systèmes de renforcement sont situés entre l'âme (2, 13) du tuyau flexible et l'enveloppe (3, 14) du tuyau flexible, le système de renforcement intérieur étant un fil en spirale (4, 15) et le système de renforcement extérieur un élément support de pression (5, 16) ondulé ;

b) un rembourrage (7, 17), dans lequel est noyé le fil en spirale (4, 15) est situé entre l'âme (2, 13) du tuyau flexible et l'élément support de pression (5, 16) ;

c) l'enveloppe (3, 14) du tuyau flexible est conçue en tant que système à nervures et rainures, des nervures (8, 18) étant chaque fois situées dans la zone des bosses (10) des éléments supports de pression et les rainures (9, 19) dans la zone des creux (11) des éléments supports de pression ;

caractérisé en ce que

d) le fil en spirale (4, 15) s'étend à proximité immédiate de l'âme (2, 13) du tuyau flexible ;

e) l'élément support de pression (5, 16) est à son point le plus profond (6) en liaison directe avec l'âme (2, 13) du tuyau flexible.

2. Tuyau flexible selon la revendication 1, caractérisé en ce que en ce que le fil en spirale (4, 15) se compose d'acier, d'acier fin ou de matière plastique (par exemple du polyamide ou une matière plastique fluorée).

3. Tuyau flexible selon la revendication 1 ou la revendication 2, caractérisé en ce que, en ce qui concerne la distance h entre le fil en spirale (4, 15) et le point le plus haut des nervures (8, 18) ainsi que l'écartement s entre fils en spirales, les paramètres suivants s'appliquent, le centre de la section transversale du fil en spirale étant chaque fois pris comme point de référence:

$h : s = 1 : 2$ à $1 : 6$
(en particulier $1 : 4$)

4. Tuyau flexible selon l'une quelconque des revendications 1 à 3, caractérisé en ce que, en ce qui concerne le diamètre $d_1$ du fil en spirale (4, 15) par rapport à l'épaisseur maximale X du rembourrage (7, 17), les paramètres suivants s'appliquent :

$d_1 : X = 1 : 1,5$ à $1 : 3$
(en particulier $1 : 2$)

5. Tuyau flexible selon l'une quelconque des revendications 1 à 4, caractérisé en ce que pour le rapport entre le diamètre $d_1$ du fil en spirale (4, 15) et le diamètre moyen $d_2$ de la spirale, les paramètres suivants s'appliquent :

$d_1 : d_2 = 1 : 30$ à $1 : 80$
(en particulier $1 : 40$ à $1 : 70$)

6. Tuyau flexible selon l'une quelconque des revendications 1 à 5, caractérisé en ce que l'élément support de pression (5, 16) se compose d'une matière textile et/ou métallique.

7. Tuyau flexible selon la revendication 6, caractérisé en ce que l'élément support de pression se compose d'une matière monofilaire ou multifilaire.

8. Tuyau flexible selon l'une quelconque des revendications 1 à 7, caractérisé en ce que le rembourrage (7, 17) se compose d'une matière élastomère et/ou textile.

9. Tuyau flexible selon l'une quelconque des revendications 1 à 8, caractérisé en ce que le rembourrage se compose de segments, en particulier d'un segment intérieur (20) et d'un segment extérieur (21), les segments de rembourrage se distinguant par des propriétés différentes des matières.

10. Tuyau flexible selon la revendication 9, caractérisé en ce que le rembourrage intérieur et extérieur se composent de caoutchouc ou d'une matière similaire au caoutchouc, la dureté Shore A du rembourrage intérieur (20) étant de 30 à 50 et celle du rembourrage extérieur (21) de 70 ou plus.

11. Tuyau flexible selon l'une quelconque des revendications 1 à 10, caractérisé en ce que en ce que les nervures (8) et les rainures (9) s'étendent de manière ondulée.

12. Tuyau flexible selon la revendication 11, caractérisé en ce que, en ce qui concerne la profondeur maximale a des rainures (9) et la distance b entre les points les plus hauts de deux nervures (8) voisines, les paramètres suivants s'appliquent :

$a : b = 1 : 2$ à $1 : 6$
(en particulier $1 : 4$)

13. Tuyau flexible selon l'une quelconque des revendications 1 à 10, caractérisé en ce que les nervures (18) sont réalisées en forme de couronne et les rainures (19) en forme d'arc.

14. Tuyau flexible selon la revendication 13, caractérisé en ce que en ce qui concerne la profondeur maximale a ainsi que la largeur maximale c des rainures (19), les paramètres suivants s'appliquent :

$a : c = 1 : 1$ à $1 : 3$
(en particulier $1 : 2$)

15. Tuyau flexible selon l'une quelconque des revendications 1 à 14, caractérisé en ce que celui-ci se compose d'un mélange de caoutchouc sur la base du polychloroprène (CR), du caoutchouc naturel (NR), d'un copolymère éthylène-propylène-diène (EPDM), du caoutchouc styrène-butadiène (SBR), du caoutchouc fluoré (FKM), du caoutchouc isoprène (IR), du caoutchouc butadiène (BR), du caoutchouc nitrile (NBR), du caoutchouc butyl (IIR), du caoutchouc butyl chloré ou bromé (ClIIR ou BrIIR), du polyéthylène chlorosulfoné (CSM), du caoutchouc vinylacétate-éthylène (EVA), du caoutchouc nitrile hydrogéné (H-NBR) ou de mélanges de ces types de caoutchouc.

16. Tuyau flexible selon l'une quelconque des revendications 1 à 15, caractérisé en ce qu'un court morceau de tuyau en matière plastique (36) est enfoncé dans les extrémités (37, 43) de segments de tuyau flexible, le morceau de tuyau étant fixé de manière à adhérer à la paroi interne du tuyau souple.

17. Tuyau flexible selon la revendication 16, caractérisé en ce que le morceau de tuyau en matière plastique (36) se compose de polyéthylène (PE), de polyuréthane (PU), de copolymère ABS ou d'une matière plastique fluorée.

18. Tuyau flexible selon la revendication 16 ou la revendication 17, caractérisé en ce que l'adhérence est basée sur un système d'adhérence (38) à deux couches, la couche intérieure (39) étant une feuille non réticulée et la couche extérieure (40) se composant de caoutchouc.

19. Tuyau flexible selon l'une quelconque des revendications 1 à 18, caractérisé en ce que les câbles tracteurs sont fixés par vulcanisation dans les extrémités du tuyau flexible.

20. Procédé pour rallonger un tuyau flexible conforme à la structure selon la revendication 16, caractérisé en ce que les tuyaux en matière plastique sont soudés l'un à l'autre en tant que pièces d'extrémité correspondantes des segments de tuyau flexible à assembler entre eux.

21. Procédé pour l'insertion par traction du tuyau flexible conforme à la structure selon l'une quelconque des revendications 1 à 19, caractérisé en ce que l'opération d'insertion du tuyau flexible est effectuée alors que les conduites sont pleines (insertion flottante du tuyau flexible) ou alors que les conduites ne sont pas pleines.

22. Procédé pour la fabrication d'un branchement d'un tuyau flexible conforme à la structure selon la revendication 16, caractérisé par les étapes suivantes :
a) après la pose du tuyau flexible, qui se compose des segments (46, 47) de tuyau flexible, le raccord en tuyau de matière plastique (48) arrive exactement au point de piquage (45) du réseau de conduites à rénover ;
b) un perçage (49) est pratiqué dans le raccord (48) ;
c) le tuyau flexible de branchement (50) qui est muni à son extrémité d'un tuyau en matière plastique (51) est tiré dans la conduite de branchement (45) jusqu'à ce que le tuyau en matière plastique du tuyau flexible de branchement pénètre dans le perçage (49) du raccord (48) du tuyau ;
d) les morceaux de tuyau en matière plastique (48, 51) sont soudés (variante A) ou bien l'ouverture restante entre les morceaux de tuyau en matière plastique (48, 51) dans la zone du perçage est bouchée par une matière (54) à élasticité permanente, le morceau de tuyau (51) dépassant à l'intérieur étant alors découpé au ras du raccord (48), les surfaces internes des morceaux de tuyau en matière plastique (48, 51) étant alors fraisées dans la zone du piquage avec formation d'évidements (55, 56) et enfin, un raccord de branchement (57) est mis en place dans ces évidements (variante B).

23. Procédé pour raccorder un tuyau flexible conforme à la structure selon l'une quelconque des revendications 1 à 19, caractérisé en ce qu'après la pose du tuyau souple dans la conduite, des brides sont mises en place en bout, la fixation des brides se faisant en particulier par vulcanisation ou par collage.

24. Procédé pour raccorder un tuyau flexible conforme à la structure selon l'une quelconque des revendications 1 à 19, caractérisé en ce que le tuyau flexible (22) muni de brides (31) rabattables vers l'intérieur, en matière hautement flexible, est tiré dans la conduite, la bride étant en particulier conçue d'une seule pièce avec le tuyau flexible (22).

25. Procédé selon la revendication 23 ou la revendication 24, caractérisé en ce que le raccordement d'une extrémité de tuyau flexible à une paroi de puits ou d'un branchement de service se fait au moyen d'une bride mobile (61) ou, en particulier dans le cas d'un raccord à même le fond à une paroi de puits, au moyen d'un système combiné composé d'un anneau raidisseur (65) et d'un anneau roulant (66).

26. Procédé pour raccorder un tuyau flexible conforme à la structure selon l'une quelconque des revendications 1 à 19, caractérisé en ce que, après la mise en place du tuyau flexible dans la conduite, le raccordement d'une extrémité de tuyau flexible sans bride à une paroi de puits se fait à l'aide d'un système combiné composé d'un anneau tendeur et d'un anneau roulant.

27. Procédé pour raccorder un tuyau flexible conforme à la structure selon l'une quelconque des revendications 1 à 19, caractérisé en ce que, après la mise en place dans la conduite du tuyau flexible dont l'extrémité est formée à la manière d'un manchon, le manchon (72) du tuyau flexible est tiré sur l'extrémité du branchement de service (73), la fixation se faisant en particulier à l'aide d'un collier de serrage (74).

28. Procédé pour raccorder un tuyau flexible conforme à la structure selon la revendication 16, caractérisé en ce qu'après la mise en place du tuyau flexible, un embout est soudé ou vissé (par exemple au moyen d'une liaison mâle-femelle, d'un système à cran d'arrêt) ou collé sur le morceau de tuyau en matière plastique (36).

Fig. 1

Fig. 2

Fig. 3

Fig. 4

Fig. 5

Fig. 6

Fig. 7

Fig. 8

EP 0 356 911 B1

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23